# EUROPEAN PATENT APPLICATION

(11) **EP 2 098 448 A1**
(43) Date of publication of application: **09.09.2009**
(21) Application number: 06841793.0
(22) Date of filing: 29.11.2006
(51) Int. Cl.: B64C 1/10, B32B 37/10

(54) **COMPOSITE PRESSURE BULKHEAD FOR AIRCRAFT**

(71) Applicant: Airbus España, S.L., s/n Getafe 28906 Madrid (ES)
(72) Inventor: GARCÍA LAJA, Agustín, 28906 Madrid (ES); CRUZ DOMINGUEZ, Francisco José, 28906 Madrid (ES)
(74) Representative: Elzaburu Marquez, Alberto
(86) International application number: PCT/ES2006/070186
(87) International publication number: WO 2008/065214

(57) **Abstract**

The present invention relates to a curved rear pressure bulkhead (1) made of a composite material, comprising three layers: an outer layer (2) and an inner layer (3) symmetrical with one another, which are made of a fiber laminate, and the intermediate layer or core (4) made of a lightweight material. With such a sandwich-type shape, the resulting bulkhead (1) is able to withstand the bending loads coming from the strain and pressurization of the fuselage without having to increase its stiffness by means of using some type of stiffener. The bulkhead (1) comprises a ring (6) that is attached to the ends of the sandwich shape. This ring (6) is split into several parts (8) to facilitate the assembly of the bulkhead (1) made of composite material to the fuselage skin (5).

## Description

### OBJECT OF THE INVENTION

The present invention relates to a rear pressure bulkhead for an aircraft made of composite material as well as to the manufacturing process thereof.

### BACKGROUND OF THE INVENTION

The pressure bulkhead for an aircraft is the structural component that supports the pressure of the fuselage of the aircraft at its ends. The strain that the fuselage of the aircraft is subjected to, particularly when the fuselage is depressurized, in this case adding the negative pressure of the fuselage with the strain due, for example, to the loads from the vertical stabilizer, are transmitted to the rear pressure bulkhead, making it bend and buck and even collapse if it is not stiff enough. In addition, it is necessary, mainly where modern aircraft designs are concerned, to manufacture pressure bulkheads minimizing their weight while maintaining their stiffness at the same time.

Pressure bulkheads made of metal, particularly aluminum, are known in the art, although these designs require metal stiffeners to make the bulkhead stiff enough to support the fuselage strains.

In addition, pressure bulkheads made of a composite material, mainly CFRP (Carbon Fiber Reinforced with Plastic) are known which also require stiffeners made of CFRP to support the strain coming from the fuselage.

Document US 5,062,589 describes a pressure bulkhead for an aircraft made of a composite material and locally stiffened in its high loaded areas by means of introducing foam, thus increasing the thickness of the bulkhead in these areas. However, it is necessary to manufacture this bulkhead in several sections so that it can be correctly assembled on the skin of the aircraft fuselage.

The object of this invention is a pressure bulkhead for an aircraft made of a composite material that solves the drawbacks of the prior art.

### SUMMARY OF THE INVENTION

This invention proposes a curved rear pressure bulkhead comprising three layers: the outer and inner layers, symmetrical in relation to one another, are formed by a fiber laminate, the intermediate layer or core being formed by a lightweight material. With such a sandwich-type shape, the resulting bulkhead is able to withstand the bending loads coming from the strain and pressurization of the fuselage without having to increase its stiffness by means of using any kind of stiffener.

The bulkhead made of the composite material according to this invention is furthermore made in a single piece without the need to be split into sections facilitating the assembly on the aircraft fuselage skin, therefore a great weight reduction is achieved by means of eliminating any type of joint while at the same time the assembly process is clearly simplified by reducing the assembly time due to the greater integration of the assembly process. The bulkhead of the invention comprises a ring that is attached to the ends of the sandwich part. this ring is split into several pieces so that it makes easier the assembly of the bulkhead made of composite material on the fuselage skin.

The invention also relates to the manufacturing process for manufacturing a pressure bulkhead made of a composite material, comprising the steps of:
a) forming and curing the core layer of the bulkhead;
b) laminating on a male jig the preimpregnated layers for the outer and inner faces of the bulkhead on both sides of the core layer, already cured and machined.
c) curing the whole part: the outer and inner faces and the core.

Other features and advantages of the present invention will be understood from the following detailed description of the illustrative embodiments of its object in relation to the attached figures.

### DESCRIPTION OF THE FIGURES

Figure 1 shows a schematic view of the position of the rear pressure bulkhead in a typical pressurized aircraft.
Figure 2 shows a schematic view of the conventional stiffened rear pressure bulkhead of a pressurized aircraft.
Figure 3 shows a schematic sectional view of the pressure bulkhead made of a composite material according to the present invention.
Figure 4 shows a detail of the ring for attaching the bulkhead made of composite material according to the invention to the aircraft fuselage skin.
Figure 5 shows a sectional view of the detail of the ring for attaching the bulkhead made of composite material according to the invention to the aircraft fuselage skin.
Figure 6 shows a detail of the ring for attaching the bulkhead made of composite material according to the invention.

### DETAILED DESCRIPTION OF THE INVENTION

The present invention proposes a curved rear pressure bulkhead 1 made of composite material, preferably in CFRP, made from carbon fibers and epoxy resin. The main advantage of CFRP is its strength/weight ratio as it is a material used to manufacture very lightweight and strong structures that are easy to optimize in relation to those made of isotropic materials. These advantages are essential for the design of pressure bulkheads for aircrafts.

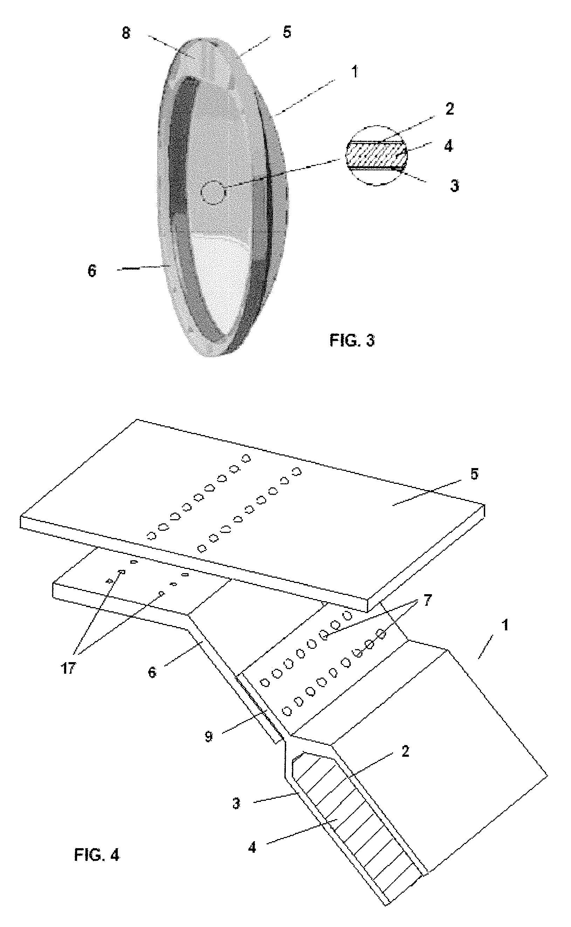

The pressure bulkhead according to the invention is made in a single piece in a 360° spherical cap shape as can be seen in Figure 3 and is made of two fiber laminates, an outer laminate 2 and an inner laminate 3, and a core 4 that is introduced in between. The laminates 2, 3 are made of pre-impregnated fiber plies that are positioned manually or by means of a fiber placement machine. The laminates 2 and 3 arranged on both sides of the core 4 are symmetrical in relation to one another, and it is not necessary for each laminate 2, 3 to be individually symmetrical. There can also be an adhesive layer between the laminates 2 and 3 and the core 4 which is necessary for preventing the laminates 2, 3 from debonding from the core 4 due to a wrinkle that may appear in the laminates 2, 3 as an effect of compression loads on the mentioned laminates 2, 3.

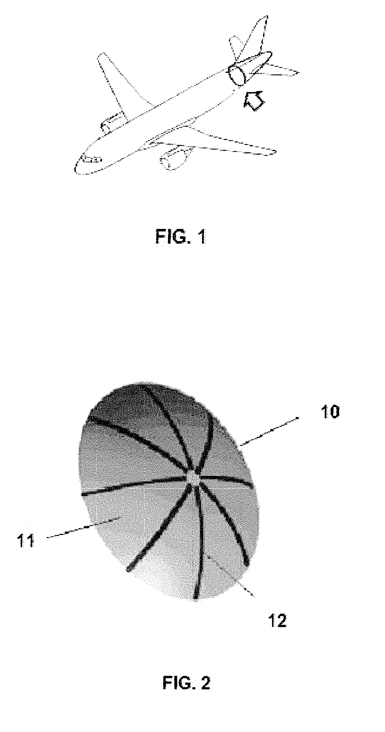

The main advantage of a bulkhead 1 made of composite material according to the invention with a sandwich-type shape compared to any conventional monolithic bulkhead 10, as shown in Figure 2, is that the bulkhead 1 of the invention withstands the bending load alone without the need to be stiffened with any type of stiffener 12, as in the case of the conventional bulkhead 10. This makes the pressure bulkhead 1 work more efficiently against loads coming from the strain of the fuselage while at the same time entails a weight reduction in comparison with the designs of current stiffened bulkheads 10. In addition, a pressure bulkhead 1 according to the invention absorbs the membrane loads coming from the pressurization of the fuselage in the same way as any conventional monolithic bulkhead 10.

The core 4 comprised between the two laminates 2, 3 is made of a lightweight material which can be formed or machined and which, according to a first preferred embodiment of the invention, is a foam. This foam minimizes typical water intake problems in sandwich-type composite structures while at the same time it is an optimal solution in terms of weight and easy machining.

According to another preferred embodiment of the invention, the core 4 comprised between the laminates 2 and 3 is made of a honeycomb-type structure that can be made of paper, metal or any other material, which structure allows exponentially increasing the stiffness of the pressure bulkhead 1 without affecting the weight of the bulkhead 1 and is lighter than the foam core 4.

The radius of the pressure bulkhead 1 will be a trade-off between the minimum weight of the bulkhead 1 and the maximum space for systems and accessibility inside the aircraft.

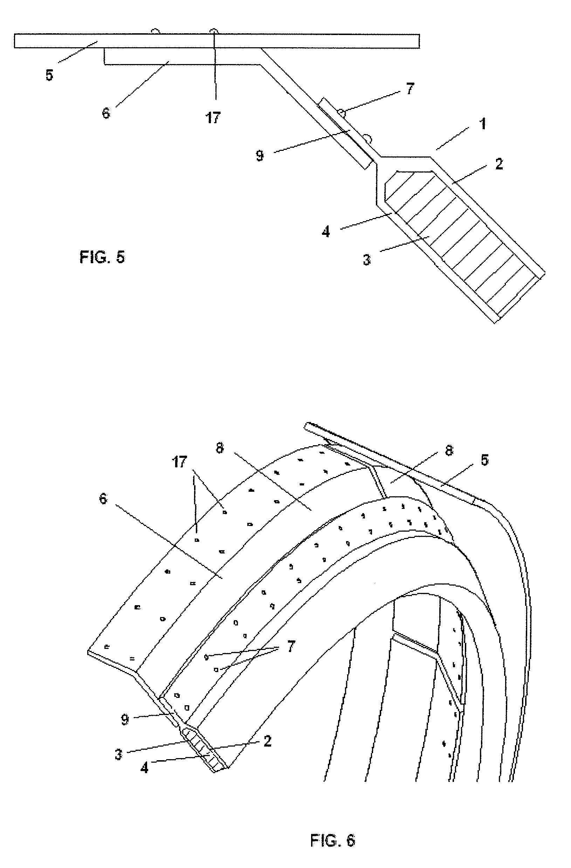

The pressure bulkhead 1 made of composite material is manufactured in a single piece, without the need to be split into sections 11 like a conventional bulkhead 10. To allow the assembly of the bulkhead 1 to the aircraft fuselage skin 5, the bulkhead 1 also comprises a ring 6 made by means of resin transfer molding, or RTM, or it is made of titanium, divided into several pieces 8 to make easier the attachment of the bulkhead 1 to the fuselage skin 5. As can be seen in Figures 4 and 5, the ends of the pressure bulkhead 1 are composed of only one fiber laminate 9, so that these ends 9 are attached to the ring 6 by means of rivets 7, attaching at the same time sections 8 of the ring 6 to the aircraft fuselage skin 5 by means of the corresponding rivets 17.

The present invention also proposes in a second aspect a manufacturing process for manufacturing a pressure bulkhead 1 made of composite material comprising two inner and outer laminates 2 and 3, respectively, and a core 4 made of a lightweight material, comprising the following steps:
a) curing the layer of the core 4 with flat plate shape
b) machining and hot-forming the layer of the core 4 so that it takes on its final shape;
c) stabilizing the layer of the core 4 so that its shape is not modified during the final curing process of the bulkhead 1;
d) laminating the outer and inner laminates 2, 3 of the bulkhead 1 with a fiber placement machine or manually on a male jig on both sides of the layer of the core 4;
e) curing the joint of the laminates 2, 3 and the core 4 in an autoclave.

Any modifications comprised within the scope defined by the following claims can be introduced in the preferred embodiments just described.

## Claims

1. A rear pressure bulkhead (1) for an aircraft fuselage made of a composite material, **characterized by** comprising three layers: an outer layer (2) made of a fiber laminate, an inner layer (3) made of a fiber laminate and an intermediate layer or core (4) made of a lightweight material, the laminates of the outer layer (2) and inner layer (3) being symmetrical with one another.

2. A rear pressure bulkhead (1) for an aircraft fuselage made of a composite material according to claim 1, **characterized in that** its end (9) is formed by a fiber laminate.

3. A rear pressure bulkhead (1) for an aircraft fuselage made of a composite material according to claims 1 or 2, **characterized by** comprising a ring (6) divided into pieces (8) to which the ends (9) of the bulkhead (1) are fixed so as to attach the bulkhead (1) to the aircraft fuselage.

4. A rear pressure bulkhead (1) for an aircraft fuselage made of a composite material according to any of the previous claims, **characterized in that** the core (4) is a foam core.

5. A rear pressure bulkhead (1) for an aircraft fuselage made of a composite material according to any of the previous claims, **characterized in that** the core (4) is a honeycomb core.

6. A rear pressure bulkhead (1) for an aircraft fuselage made of a composite material according to any of the previous claims, **characterized in that** the composite material is CFRP.

7. A rear pressure bulkhead (1) for an aircraft fuselage made of a composite material according to any of the previous claims, **characterized by** an adhesive layer between the outer layer (2) and the core (4) and between the inner layer (3) and the core (4).

8. A manufacturing process for manufacturing a rear pressure bulkhead (1) made of composite material according to claim 1, **characterized by** comprising the following steps:
f) curing the layer of the core 4 with flat plate shape
g) machining and hot-forming the layer of the core 4 so that it takes on its final shape;
h) stabilizing the layer of the core 4 so that its shape is not modified during the final curing process of the bulkhead 1;
i) laminating the outer and inner laminates 2, 3 of the bulkhead 1 with a fiber placement machine or manually on a male jig on both sides of the layer of the core 4;
a) curing the joint of the laminates 2, 3 and the core 4 in an autoclave.
